# EUROPEAN PATENT SPECIFICATION

(11) **EP 2 190 194 B1**
(45) Date of publication and mention of the grant of the patent: **20.07.2011**
(21) Application number: 09172254.6
(22) Date of filing: 05.10.2009
(51) Int. Cl.: H04N 5/775, H04N 5/00

(54) **Broadcast receiving apparatus and broadcast outputting apparatus for providing time-shifted broadcast signal, and method for providing time-shifted image thereof**
Rundfunkempfangsvorrichtung und Rundfunkausgabevorrichtung zur Bereitstellung eines zeitversetzten Rundfunksignals und Verfahren zur Bereitstellung eines zeitversetzten Bildes daraus
Appareil de réception de diffusion et appareil d'émission de diffusion pour la fourniture d'un signal de diffusion différée et procédé pour la fourniture de l'image différée correspondante

(30) Priority: 25.11.2008 KR 20080117626
(43) Date of publication of application: 26.05.2010
(73) Proprietor: Samsung Electronics Co., Ltd., Suwon-si, Gyeonggi-do 442-742 (KR)
(72) Inventor: Kim, Do-wan, Gyeonggi-do (KR); Ahn, Ho-sung, Gyeonggi-do (KR)
(74) Representative: Davies, Robert Ean

(56) References cited:
- EP-A1- 1 978 728
- US-A1- 2004 177 380
- US-A1- 2005 076 374
- US-A1- 2007 159 555
- US-B1- 6 766 100

## Description

Apparatuses and methods consistent with the present invention relate to a broadcast receiving apparatus, a broadcast outputting apparatus, and a method for providing a time-shifted image thereof, and more particularly, to a broadcast receiving apparatus and a broadcast outputting apparatus for providing a time-shifted broadcast signal, and a method for providing a time-shifted image thereof.
A television refers to an apparatus that reproduces an incoming 'broadcast program' (hereinafter, referred to as 'broadcast') on a screen. Recently, such a TV provides a 'time-shift' function. The time-shift function refers to a function for reproducing a broadcast that was previous broadcast, i.e., prior to the current broadcasting time, thereby allowing a user to watch the previous broadcast at a convenient time. For example, when a user does not watch a real-time broadcast for a short while, for example, because he/she goes to the bathroom, the time-shift function records the broadcast and reproduces the broadcast from the point of time that the broadcast has paused, allowing the user to watch the previous broadcast at a convenient time.
The time-shifted broadcast is displayed on a full screen of the TV or on a (picture-in-picture) PIP screen. If the time-shifted broadcast is displayed on the full screen, the TV superimposes information regarding a current broadcasting time (hereinafter, referred to as 'current broadcasting time information') on the image of the time-shifted broadcast, thereby providing the current broadcasting time information to the user.
If the time-shifted broadcast is displayed on the full screen as described above, the user cannot watch the real-time broadcast. Even if the time-shifted broadcast is displayed on the PIP screen, the user cannot watch the part of the real-time broadcast which is covered by the image of the time-shifted broadcast.
The user wishes to watch the real-time broadcast without any part being covered by the time-shifted image. Therefore, there is a demand for a method for allowing a user to watch a time-shifted broadcast and a real-time broadcast concurrently.

US patent applications US 2005/0076374 A1 discloses an A/V home server provided with recording capabilities and able to output received broadcast signals, either alive or recorded, to connected TV displays and/or computer equipments.

US patent US 6,766,100 B1 discloses a television multi-tuner system able to show in separated picture-in-picture screens of a same display apparatus a live TV signal and a time-shifted signal.

Exemplary embodiments of the present invention overcome the above disadvantages and other disadvantages not described above. Also, the present invention is not required to overcome the disadvantages described above, and an exemplary embodiment of the present invention may not overcome any of the problems described above.
The exemplary embodiments of the present invention provide a broadcast receiving apparatus which receives a broadcast signal, transmits the received broadcast signal to a display apparatus, and transmits a broadcast signal stored in a storage unit to another display apparatus, and a method for providing a time-shifted image thereof.
The exemplary embodiments of the present invention also provide a broadcast outputting apparatus which receives a broadcast signal and outputs the received broadcast signal, and time-shifts a broadcast signal stored in a storage unit and transmits the time-shifted broadcast signal to a display apparatus, and a method for providing a time-shifted image thereof.

According to the present invention there is provided an apparatus and method as set forth in the appended claims. Other features of the invention will be apparent from the dependent claims, and the description which follows.

Additional and/or other aspects and advantages of the invention will be set forth in part in the description which follows and, in part, will be obvious from the description, or may be learned by practice of the invention.
For a better understanding of the invention, and to show how embodiments of the same may be carried into effect, reference will now be made, by way of example, to the accompanying diagrammatic drawings in which:
FIG. 1 is a view illustrating a video system for providing a time-shift function consistent with an exemplary embodiment of the present invention;
FIG. 2 is a block diagram illustrating a set-top box consistent with an exemplary embodiment of the present invention;
FIG. 3 is a flowchart illustrating a method for providing a time-shifted image, which is performed on the set-top box consistent with an exemplary embodiment of the present invention;
FIG. 4 is a view illustrating a video system for providing a time-shift function consistent with another exemplary embodiment of the present invention;
FIG. 5 is a block diagram illustrating a TV consistent with another exemplary embodiment of the present invention; and
FIG. 6 is a flowchart illustrating a method for providing a time-shifted image, which is performed on the TV consistent with another exemplary embodiment of the present invention.
Certain exemplary embodiments of the present invention will now be described in greater detail with reference to the accompanying drawings.
In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

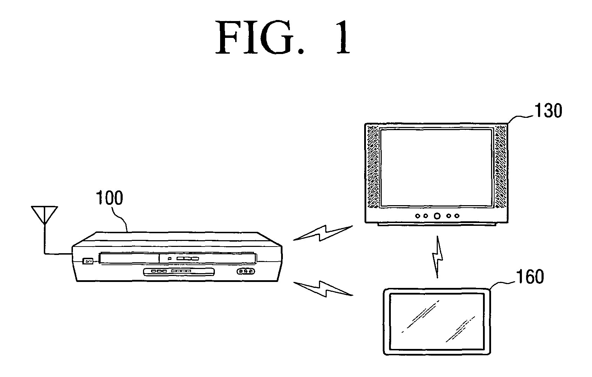

FIG. 1 is a view illustrating a video system for providing a time-shift function according to an exemplary embodiment of the present invention. Referring to FIG.1, a video system comprises a set-top box 100, a TV 130, and a sub-display apparatus 160.
The set-top box 100 receives a broadcast signal and transmits the received broadcast signal to the TV 130 in a wired or wireless manner. The set-top box 100 records and stores the received broadcast signal to provide a time-shift function. The set-top box 100 time-shifts the stored broadcast signal and transmits the time-shifted broadcast signal to the sub-display apparatus 160 in a wired or wireless manner.
The TV 130 outputs video and audio which are included in the broadcast signal received from the set-top box 100
The sub-display apparatus 160 receives the time-shifted broadcast signal from the set-top box 100 and outputs the time-shifted broadcast signal. The time-shifted broadcast signal refers to a broadcast signal which has already broadcasted before the current broadcast signal broadcasts in real time. More specifically, the time-shifted broadcast signal is a broadcast signal which has been recorded since when a time-shift function was activated by a user.
In the video system described above, since the real-time broadcast is output through the TV 130 and the time-shifted broadcast is output through the sub-display apparatus 160, the user can watch the real-time broadcast without any part of it being covered by the time-shifted broadcast and also can watch the time-shifted broadcast through the sub-display apparatus 160.

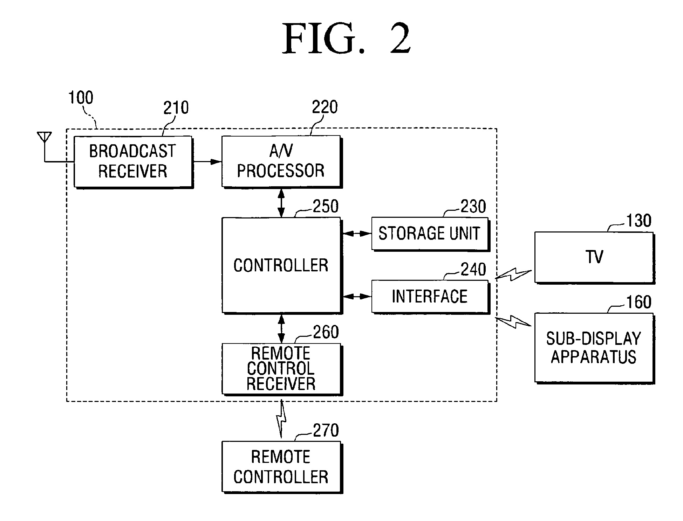

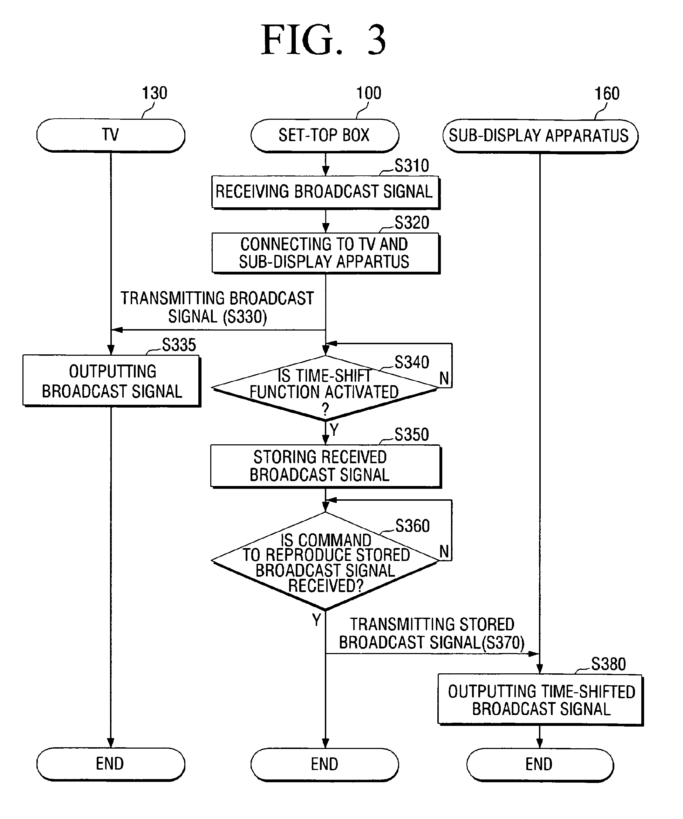

Hereinafter, the set-top box 100 will be described in detail with reference to FIG. 2. FIG. 2 is a block diagram illustrating the set-top box according to an exemplary embodiment of the present invention.
As shown in FIG. 2, the set-top box 100 comprises a broadcast receiver 210, an AN processor 220, a storage unit 230, an interface 240, a controller 250, and a remote control receiver 260. The broadcast receiver 210 receives a broadcast signal from a broadcasting station or satellite in a wired or wireless manner and demodulates the broadcast signal.
The A/V processor 220 performs signal-processing, such as video-decoding, video-scaling, and audio-decoding, with respect to a video signal and an audio signal which are included in the broadcast signal received at the broadcast receiver 210.
The storage unit 230 stores the received broadcast signal. That is, in order to provide a time-shift function, the storage unit 230 stores the broadcast signal when the time-shift function is activated. The storage unit 230 may be realized as a hard disk, a non-volatile memory, a flash memory, or other persistent storage.
The interface 240 is connected to the TV 130 and the sub-display apparatus 160 in a wired or wireless manner. The interface 240 may be an A/V interface which is operated according to standards such as component, composite, S-Video, DVI, and HDMI, or a network interface of wired LAN if the interface 240 is connected to the TV 130 and the sub-display apparatus 160 in a wired manner. Also, the interface 240 may be a wireless network interface of Bluetooth and wireless LAN if the interface 240 is connected to the TV 130 and the sub-display apparatus 160 in a wireless manner.
The remote control receiver 260 receives manipulation by a user from a remote controller 270 and transmits the manipulation to the controller 250.
The controller 250 understands a user command based on the manipulation by a user transmitted from the remote controller 260 and controls the entire operation of the set-top box 100 according to the user command.
The controller 250 transmits the received broadcast signal to the TV 130 through the interface 240. Prior to the display of the received broadcast signal on the TV 130, the received broadcast signal may be stored in non-persistent memory. Also, the controller 250 time-shifts the broadcast signal which is stored in the storage unit 230 and transmits the time-shifted broadcast signal to the sub-display apparatus 160 through the interface 240.
More specifically, if a time-shift function is activated, the controller 150 stores the received broadcast signal to the storage unit 230. Then, if a command to reproduce the stored broadcast signal is received, the controller 250 transmits the broadcast signal, which has been stored since the time-shift function was activated, to the sub-display apparatus 160 through the interface 240. The command to reproduce the stored broadcast signal is a command to reproduce a time-shifted image. The controller 250 stores the broadcast signal when the time-shift function is activated. Accordingly, if the user inputs a command to reproduce the stored broadcast signal, the user can watch the broadcast which has paused since when the time-shift function was activated.
The user may input the command to reproduce the stored broadcast signal using an input device of the set-top box 100 or the remote controller 270, or may input the command using the sub-display apparatus 160.
Accordingly, the sub-display apparatus 160 reproduces the broadcast which has been time-shifted starting when the time-shift function was activated.
If a plurality of display apparatuses are connected to the set-top box 100, the controller 250 may transmit the stored broadcast signal to one of the plurality of display apparatuses that has sent a command to reproduce the stored broadcast signal.
If the time-shift function is activated, the controller 250 changes a resolution of the received broadcast signal and stores the broadcast signal whose resolution has been changed in the storage unit 230. For example, the controller 250 downscales the broadcast signal of high definition (HD) class to the broadcast signal of standard definition (SD) class, and stores the downscaled broadcast signal to the storage unit 230. Therefore, the resolution of the received broadcast signal may be different from that of the broadcast signal stored in the storage unit 230.
The controller 250 may store the broadcast signal whose resolution has remained unchanged along with the broadcast signal whose resolution has been changed. For example, the controller 250 may store the received broadcast signal of HD class and may change the broadcast signal of HD class to the broadcast signal of SD class and store it along with the broadcast signal of HD class.
This is because the sub-display apparatus 160 may display an image with a resolution different from that of the received broadcast signal. Accordingly, the controller 250 may change the resolution of the received broadcast signal to be suitable for the display on the sub-display apparatus 160.
As a result, the broadcast signal stored in the storage unit 230 have a resolution suitable for the sub-display apparatus 160.
On the other hand, the controller 250 may store only the broadcast signal whose resolution remains unchanged in the storage unit 230. Then, if a command to reproduce the stored broadcast signal (that is, a command to reproduce a time-shifted image) is received, the controller 250 receives resolution information from the sub-display apparatus 160, changes the resolution of the stored broadcast signal to correspond to the resolution information, and then transmits the broadcast signal whose resolution has been changed to the sub-display apparatus 160. Accordingly, the set-top box 100 can increase compatibility with respect to the various sub-display apparatuses 160.
As described above, the set-top box 100 time-shifts the broadcast signal stored in the storage unit 230 and transmits the time-shifted broadcast signal to the sub-display apparatus 160, so that the user can watch the real-time broadcast through the TV 130 and also can simultaneously watch the time-shifted broadcast through the sub-display apparatus 160. Hereinafter, a method for providing a time-shifted image will be described with reference to FIG. 3. FIG. 3 is a flowchart illustrating a method for providing a time-shifted image, which is performed on the set-top box 100 according to an exemplary embodiment of the present invention.
The set-top box 100 receives a broadcast signal (S310). The set-top box 100 is connected to the TV 130 and the sub-display apparatus 160 through the interface 240 in a wired or wireless manner (S320).
The set-top box 100 transmits the received broadcast signal to the TV 130 (S330). Then, the TV 130 outputs the broadcast signal received from the set-top box 100 on a screen (S335).
The set-top box 100 determines whether a time-shift function is activated or not by a user (S340). The time-shift function refers to a function for recording the broadcast. If the time-shift function is activated (S340-Y), the set-top box 100 stores the received broadcast signal to the storage unit 230 (S350).
At this time, if the time-shift function is activated, the set-top box 100 may change the resolution of the received broadcast signal and may store the broadcast signal whose resolution has been changed in the storage unit 230. For example, the set-top box 100 downscales the received broadcast signal of HD class to the broadcast signal of SD class and stores the downscaled broadcast signal to the storage unit 230. Accordingly, the resolution of the received broadcast signal may be different from that of the broadcast signal stored in the storage unit 230.
This is because the sub-display apparatus 160 may display an image with a resolution different from that of the received broadcast signal. Accordingly, the set-top box 100 changes the resolution of the received broadcast signal to be suitable for the display on the sub-display apparatus 160.
After that, the set-top box 100 determines whether a command to reproduce the stored broadcast signal is received or not from the user (S360). If the command to reproduce the stored broadcast signal is received (S360-Y), the set-top box 100 transmits the stored broadcast signal to the sub-display apparatus 160 (S370).
Then, the sub-display apparatus 160 outputs the time-shifted broadcast signal on the screen (S380). That is, the sub-display apparatus 160 displays the broadcast signal which has paused since when the time-shift function was activated.
Through the above-described process, the sub-display apparatus 160 displays the time-shifted image.
Up to now, the set-top box 100 which transmits a time-shifted broadcast signal to the sub-display apparatus 160 was described with reference to FIGS. 1 to 3.

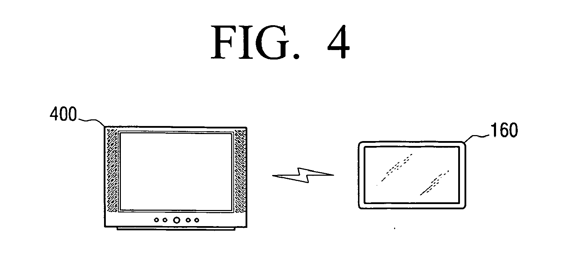

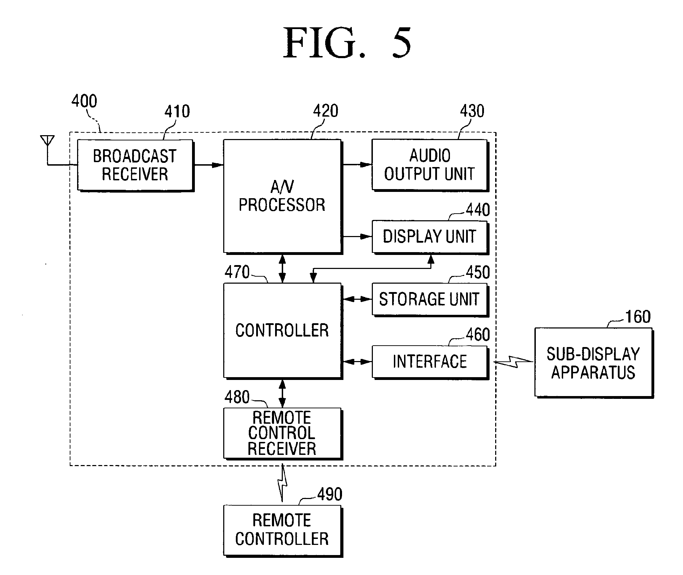

Although as a display apparatus connected to the set-top box 100, the TV 130 and the sub-display apparatus 160 are provided in the above embodiment, any display apparatus can be applied if it can display the broadcast signal.
Also, although two display apparatus, the TV 130 and the sub-display apparatus 160, are provided in the above embodiment, the set-top box 100 may be connected to three or more display apparatuses. In this case, the interface 240 is connected to the plurality of display apparatuses, and the controller 250 transmits the received broadcast signal to at least one of the plurality of display apparatuses, and transmits the time-shifted broadcast signal to at least one of the other display apparatuses.
Also, although the broadcast receiving apparatus is the set-top box 100 in the above embodiment, any device can be applied if it can transmit a received broadcast signal to a display apparatus.
Hereinafter, a TV 400 which transmits a time-shifted broadcast signal to a sub-display apparatus 160 will be described with reference to FIGS. 4 to 6.
FIG. 4 is a view illustrating a video system for providing a time-shift function according to another exemplary embodiment of the present invention. As shown in FIG. 4, a video system comprises a TV 400 and a sub-display apparatus 160.
The TV 400 receives a broadcast signal and outputs video and audio of the received broadcast signal through a screen and a speaker. Also, the TV 400 records and stores the received broadcast signal to provide a time-shift function. Also, the TV 400 time-shifts the stored broadcast signal and transmits the time-shifted broadcast signal to the sub-display apparatus 160 in a wired or wireless manner.
The sub-display apparatus 160 receives a time-shifted broadcast signal from the TV 400, and outputs the time-shifted broadcast signal. The time-shifted broadcast refers to a broadcast signal which has already been broadcasted before the current broadcast signal broadcasts in real time. More specifically, the time-shifted broadcast signal refers to a signal which has been recorded since the time-shift function was activated by the user.
In the video system described above, the TV 400 receives and outputs a real-time broadcast, and the sub-display apparatus 160 outputs a time-shifted broadcast signal. Accordingly, the user can watch the time-shifted broadcast through the sub-display apparatus 160 without covering any part of the real-time broadcast.
Hereinafter, the TV 400 will be described in detail with reference to FIG. 5. FIG. 5 is a block diagram illustrating the TV 400 according to another exemplary embodiment of the present invention.
As shown in FIG. 5, the TV 400 comprises a broadcast receiver 410, an A/V processor 420, an audio output unit 430, a display unit 440, a storage unit 450, an interface 460, a controller 470, and a remote control receiver 480.
The broadcast receiver 410 receives a broadcast signal from a broadcasting station or satellite in a wired or wireless manner and demodulates the broadcast signal.

The A/V processor 420 performs signal-processing, such as video-decoding, video-scaling, and audio-decoding, with respect to a video signal and an audio signal which are included in the broadcast signal received at the broadcast receiver 410. The A/V processor 420 outputs the video signal to the display unit 440 and outputs the audio signal to the audio output unit 430.
The audio output unit 430 outputs the audio output from the A/V processor 420 through a speaker.
The display unit 440 displays the video output from the AN processor 420.
That is, the display unit 440 and the audio output unit 430 output the video and the audio which are included in the received broadcast signal in real time.
The storage unit 450 stores the received broadcast signal. That is, in order to provide a time-shift function, the storage unit 450 stores the received broadcast signal when the time-shift function is activated. The storage unit 450 may be realized as a hard disk, a non-volatile memory, or a flash memory.
The interface 460 is connected to the sub-display apparatus 160 in a wired or wireless manner. The interface 460 may be an A/V interface which is operated according to standards such as component, composite, S-Video, DVI, and HDMI, or a network interface of wired LAN if the interface 460 is connected to the sub-display apparatus 160 in a wired manner. Also, the interface 460 may be a wireless network interface of Bluetooth and wireless LAN if the interface 460 is connected to the sub-display apparatus 160 in a wireless manner.
The remote control receiver 480 receives manipulation by a user from a remote controller 490 and transmits the manipulation to the controller 470.
The controller 470 understands a user command based on the manipulation by the user transmitted from the remote controller 490, and controls the entire operation of the TV 400 according to the user command.
The controller 470 time-shifts the broadcast signal stored in the storage unit 450 and transmits the time-shifted broadcast signal to the sub-display apparatus 160 through the interface 460.
More specifically, if a time-shift function is activated, the controller 470 stores the received broadcast signal to the storage unit 450. Then, if a command to reproduce the stored broadcast signal, the controller 470 transmits the broadcast signal, which has been stored since when the time shift function was activated, to the sub-display apparatus 160 through the interface 460. The command to reproduce the stored broadcast signal refers to a command to reproduce a time-shifted image. The controller 470 stores the broadcast signal when the time-shift function is activated. Accordingly, if the user inputs a command to reproduce the stored broadcast signal, the user can watch the broadcast which has paused since the time shift function was activated.
The user may input the command to reproduce the stored broadcast signal through an input device of the TV 400 or the remote controller 490 or may input the command through the sub-display apparatus 160. Accordingly, the sub-display apparatus 160 reproduces the broadcast which has been time shifted when the time-shift function was activated.

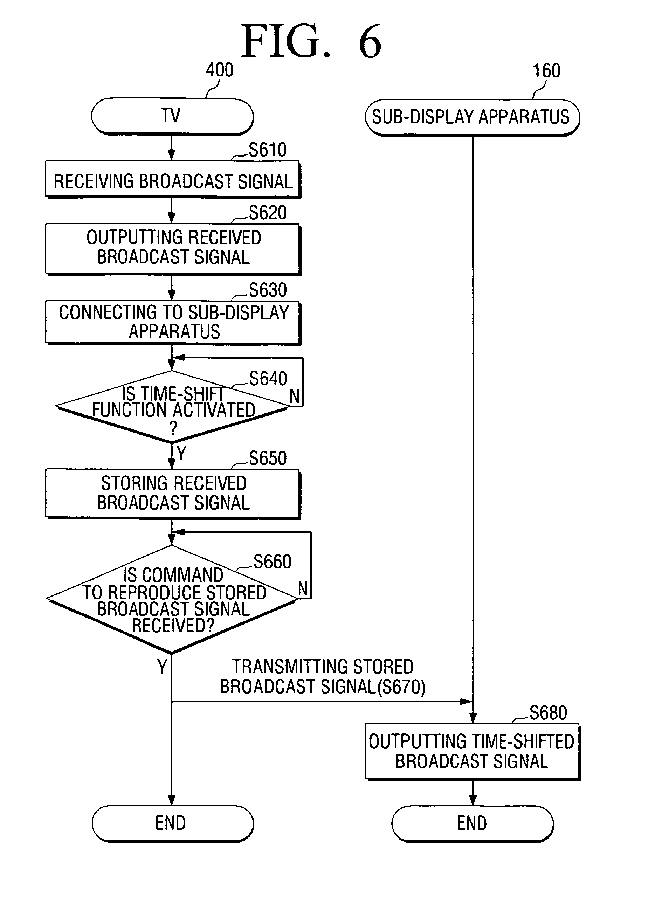

Also, if the time-shift function is activated, the controller 470 changes the resolution of the received broadcast signal and stores the broadcast signal whose resolution has been changed in the storage unit 450. For example, the controller 470 downscales the broadcast signal of HD class to the broadcast signal of SD class, and stores the downscaled broadcast signal to the storage unit 450. Accordingly, the resolution of the received broadcast signal may be different from the resolution of the broadcast signal stored in the storage unit 450.
Also, the controller 470 may store the broadcast signal whose resolution remains unchanged along with the broadcast signal whose resolution has been changed. For example, the controller 470 may stores the broadcast signal of HD class and changes the received broadcast signal from the HD class to the SD class and stores it along with the broadcast signal of HD class.
This is because the sub-display apparatus 160 may display an image with a resolution different from that of the received broadcast signal. Accordingly, the controller 470 may change the resolution of the received broadcast signal to be suitable for the display on the sub-display apparatus 160.
As a result, the broadcast signal stored in the storage unit 450 has a resolution suitable for the sub-display apparatus 160.
The controller 470 may store only the broadcast signal whose resolution remains unchanged in the storage unit 450. Then, if the command to reproduce the stored broadcast signal (that is, a command to reproduce a time-shifted image) is received, the controller 470 receives resolution information from the sub-display apparatus 160, changes the resolution of the stored broadcast signal to correspond to the resolution information, and then transmits the broadcast signal whose resolution has been changed to the sub-display apparatus 160. Accordingly, the TV 400 can increase the compatibility with respect to the various sub-display apparatuses 160.
Since the TV 400 time-shifts the broadcast signal stored in the storage unit 450 and transmits the time-shifted broadcast signal to the sub-display apparatus 160, the user can watch the real-time broadcast through the TV 400 and also can watch the time-shifted broadcast through the sub-display apparatus 160.
Hereinafter, a method for providing a time-shifted image will be described with reference to FIG. 6. FIG. 6 is a flowchart illustrating a method for providing a time-shifted image, which is performed on the TV 400 according to another exemplary embodiment of the present invention.
The TV 400 receives a broadcast signal (S610). The TV 400 outputs at least one of video and audio which are included in the received broadcast signal (S620). That is, the TV 400 outputs a real-time broadcast.

The TV 400 is connected to the sub-display apparatus 160 through the interface 460 in a wired or wireless manner (S630).
After that, the TV 400 determines whether a time-shift function is activated or not by the user (S640). The time-shift function refers to a function for recording the broadcast. Accordingly, if the time-shift function is activated (S640-Y), the TV 400 stores the received broadcast signal to the storage unit 450 (S650).
If the time-shift function is activated, the TV 400 may change the resolution of the received broadcast signal and may store the broadcast signal whose resolution has been changed in the storage unit 450. For example, the TV 400 downscales the broadcast signal of HD class to the broadcast signal of SD class and stores the downscaled broadcast signal to the storage unit 450. Accordingly, the resolution of the received broadcast signal may be different from that of the broadcast signal stored in the storage unit 450.
This is because the sub-display apparatus 160 may display an image with a resolution different from that of the received broadcast signal. Accordingly, the TV 400 may change the resolution of the received broadcast signal to be suitable for the display on the sub-display apparatus 160.
After that, the TV 400 determines whether a command to reproduce the stored broadcast signal is received or not from the user (S660). If the command to reproduce the stored broadcast signal is received (S660-Y), the TV 400 transmits the stored broadcast signal to the sub-display apparatus 160 (S670).
Then, the sub-display apparatus 160 outputs the time-shifted broadcast signal on the screen (S680). That is, the sub-display apparatus 160 outputs the broadcast signal which has paused since when the time-shift function was activated on the screen.
Through the above-described process, the TV 400 can display the time-shifted image on the sub-display apparatus 160.
Although the sub-display apparatus 160 serves as a display apparatus for the TV 400 in the above embodiment, any display apparatus can be applied if it can display the broadcast signal. Also, although one sub-display apparatus 150 is provided in the above embodiment, the TV 400 may be connected to two or more display apparatuses. In this case, the interface 460 is connected to the plurality of display apparatuses, and the controller 470 transmits the time-shifted broadcast signal to at least one of the plurality of display apparatuses.
Also, although the TV 400 is provided as a broadcast outputting apparatus in the above embodiment, any apparatus can be applied if it can output the broadcast signal on its own screen.
According to the exemplary embodiments of the present invention described above, it is possible to provide a broadcast receiving apparatus, which receives a broadcast signal and transmits the received broadcast signal to a display apparatus, and time-shifts a broadcast signal stored in a storage unit and transmits the time-shifted broadcast signal to another display apparatus, and a method for providing a time-shifted image thereof. Accordingly, the user can watch the time-shifted broadcast through an external display apparatus.
Also, since the time-shifted broadcast is reproduced through another display apparatus different from a display apparatus broadcasting a real-time broadcast, the user can watch the time-shifted broadcast using an external display apparatus without covering any part of the real-time broadcast.

## Claims

1. A broadcast receiving apparatus (100) comprising:
a broadcast receiver (210) which receives a broadcast signal;
a storage unit (230) which stores the received broadcast signal if a time-shift function is activated;
an interface (240) which is connected to a plurality of display apparatuses; and **characterised by**
a controller (250) which transmits the received broadcast signal to at least one (130) of the plurality of display apparatuses, and transmits the broadcast signal stored in the storage unit to at least another (160) of the plurality of display apparatuses if a command to reproduce the stored broadcast signal is received.

2. The broadcast receiving apparatus as claimed in claim 1, wherein a resolution of the received broadcast signal is different from a resolution of the broadcast signal stored in the storage unit.

3. The broadcast receiving apparatus as claimed in claim 1 or 2, further comprising an output unit which outputs at least one of video and audio which are included in the received broadcast signal.

4. The broadcast receiving apparatus as claimed in any one of claims 1 to 3, wherein, if the time-shift function is activated, the controller changes a resolution of the received broadcast signal and stores the broadcast signal with the changed resolution in the storage unit.

5. A method for providing a time-shifted image, the method comprising:
Receiving (S310) a broadcast signal;
transmitting (S330) the received broadcast signal to at least one of a plurality of display apparatuses;
if a time-shift function is activated, storing (S350) the received broadcast signal; and **characterised in that**
if a command to reproduce the stored broadcast signal is received, transmitting (S370) the stored broadcast signal to at least another of the plurality of display apparatuses.

6. The method as claimed in claim 5, wherein a resolution of the received broadcast signal is different from a resolution of the stored broadcast signal.

7. The method as claimed in claim 5 or 6, further comprising outputting at least one of video and audio which are included in the received broadcast signal.

8. The method as claimed in any one of claims 5 to 7, wherein the storing operation comprises:
if the time-shift function is activated, changing a resolution of the received broadcast signal; and
storing the received broadcast signal with the changed resolution.

9. The method as claimed in any one of claims 5 to 8, wherein the at least one of other display apparatuses is a display apparatus of the plurality of display apparatus that has sent a command to reproduce the stored broadcast signal.

## Patentansprüche

1. Rundfunkempfangsvorrichtung (100) umfassend:
einen Rundfunkempfänger (210), der ein Rundfunksignal empfängt;
eine Speichereinheit (230), die das empfangene Rundfunksignal speichert, wenn eine Zeitversetzungsfunktion aktiviert wird;
eine Schnittstelle (240), die mit einer Vielzahl von Anzeigevorrichtungen verbunden ist; und **gekennzeichnet durch**
eine Steuerung (250), die das empfangene Rundfunksignal zu mindestens einer (130) der Vielzahl von Anzeigevorrichtungen überträgt, un d das in der Speichereinheit gespeicherte Rundfunksignal zu mindestens einer weiteren (160) der Vielzahl von Anzeigevorrichtungen überträgt, wenn ein Befehl zum wiedergeben des gespeicherten Rundfunksignals empfangen wird.

2. Rundfunkempfangsvorrichtung nach Anspruch 1, wobei sich eine Auflösung des empfangenen Rundfunksignals von einer Auflösung de s in de r Speichereinheit gespeicherten Rundfunksignals unterscheidet.

3. Rundfunkempfangsvorrichtung nach Anspruch 1 oder 2, weiterhin umfassend eine Ausgabeeinheit, die mindestens eines von Bild und Ton ausgibt, die in dem empfangenen Rundfunksignal enthalten sind.

4. Rundfunkempfangsvorrichtung nach einem beliebigen der Ansprüche 1 bis 3, wobei bei Aktivierung der Zeitversetzungsfunktion die Steuerung eine Auflösung des empfangenen Rundfunksignals ändert und das Rundfunksignal mit der geänderten Auflösung in der Speichereinheit speichert.

5. Verfahren zur Bereitstellung eines zeitversetzten Bildes, wobei das Verfahren umfasst:
Empfangen (S310) eines Rundfunksignals;
Übertragen (S330) des empfangenen Rundfunksignals zu mindestens einer einer Vielzahl von Anzeigevorrichtungen;
bei Aktivierung ei n e r Zeitversetzungsfunktion Speichern (S350) des empfangenen Rundfunksignals; und **gekennzeichnet durch**:
bei Empfang eines Befehls zum Wiedergeben des gespeicherten Rundfunksignals Übertragen (S370) des gespeicherten Rundfunksignals zu mindestens einer weiteren der Vielzahl von Anzeigevorrichtungen.

6. Verfahren nach Anspruch 5, wobei eine Auflösung des empfangenen Rundfunksignals sich von einer Auflösung de s gespeicherten Rundfunksignals unterscheidet.

7. Verfahren nach Anspruch 5 oder 6, weiterhin umfassend Ausgeben von mindestens einem von Bild und Ton, die in dem empfangenen Rundfunksignal enthalten sind.

8. Verfahren nach einem beliebigen der Ansprüche 5 bis 7, wobei die Speicherungsoperation umfasst:
bei Aktivieren der Zeitversetzungsfunktion Ändern einer Auflösung des empfangenen Rundfunksignals und
Speichern des empfangenen Rundfunksignals mit der geänderten Auflösung.

9. Verfahren nach einem beliebigen der Ansprüche 5 bis 8, wobei die mindestens eine von anderen Anzeigevorrichtungen eine Anzeigevorrichtung der Vielzahl von Anzeigevorrichtungen ist, die einen Befehl zum Wiedergeben de s gespeicherten Rundfunksignals gesendet hat.

## Revendications

1. Appareil de réception de diffusion (100) comprenant:
un récepteur de diffusion (210) qui reçoit un signal de diffusion ;
une unité de stockage (230) qui stocke le signal de diffusion reçu si une fonction de décalage temporel est activée;
une interface (240) qui est connectée à une pluralité d'appareils d'affichage; et
**caractérisé par**
une unité de commande (250) qui transmet le signal de diffusion reçu à au moins un (130) de la pluralité d'appareils d'affichage, et transmet le signal diffusé stocké dans l'unité de stockage à au moins un autre (160) de la pluralité de dispositifs d'affichage si une commande de reproduction du signal de diffusion stocké est reçue.

2. Appareil de réception de diffusion selon la revendication 1, dans lequel la résolution du signal de diffusion reçu est différente de la résolution du signal de diffusion stocké dans l'unité de stockage.

3. Appareil de réception de diffusion selon la revendication 1 ou 2, comprenant en outre une unité de sortie fournissant en sortie au moins un signal vidéo et un signal audio qui sont contenus dans le signal de diffusion reçu.

4. Appareil de réception de diffusion selon l'une quelconque des revendications 1 à 3, dans lequel, si la fonction de décalage temporel est activée, l'unité de commande modifie la résolution du signal de diffusion reçu et stocke le signal de diffusion avec la résolution modifiée dans l'unité de stockage.

5. Procédé de fourniture d'une image décalée temporellement, le procédé consistant à :
recevoir (S310) un signal de diffusion ;
transmettre (S330) le signal de diffusion reçu à au moins l'un d'une pluralité d'appareils d'affichage;
si une fonction de décalage temporel est activée, stocker (S350) le signal de diffusion reçu ; et
**caractérisé en ce que**
si une commande de reproduction du signal de diffusion stocké est reçue, transmettre (S370) le signal de diffusion stocké à au moins un autre de la pluralité d'appareils d'affichage.

6. Procédé selon la revendication 5, dans lequel la résolution du signal de diffusion reçu est différente de la résolution du signal de diffusion stocké.

7. Procédé selon la revendication 5 ou 6, consistant à fournir en sortie au moins l'un d'un signal vidéo et d'un signal audio qui sont contenus dans le signal de diffusion reçu.

8. Procédé selon l'une quelconque des revendications 5 à 7, dans lequel l'opération de stockage consiste à :
si la fonction de décalage temporel est activée, modifier la résolution du signal de diffusion reçu ; et stocker le signal de diffusion reçu avec la résolution modifiée.

9. Procédé selon l'une quelconque des revendications 5 à 8, dans lequel l'au moins un des autres appareils d'affichage es t un appareil d'affichage de la pluralité d'appareils d'affichage qui a renvoyé une commande de reproduction du signal de diffusion stocké.
